# EUROPEAN PATENT SPECIFICATION

(11) **EP 1 964 331 B1**
(45) Date of publication and mention of the grant of the patent: **18.08.2010**
(21) Application number: 05850404.4
(22) Date of filing: 13.12.2005
(51) Int. Cl.: H04L 12/56

(54) **Configuration method, switching element and use of configuration method for configuring an ethernet network with optical links by defining logical ports made up of bidirectional and unidirectional physical ports**
Konfigurationsverfahren, Schaltelement und Verwendung eines Konfigurationsverfahrens zum konfigurieren eines Ethernet-Netzes mit optischen Strecken durch definieren von aus bidirektionalen und unidirektionalen physischen Ports bestehenden logischen Ports
Procédé de configuration, element de commutation et utilisation du procédé de configuration en vue de configurer un réseau ethernet dote de liaisons optiques en definissant des ports logiques composés de ports physiques bidirectionnels et unidirectionnels

(43) Date of publication of application: 03.09.2008
(73) Proprietor: Alcatel Lucent, 75008 Paris (FR); Ge, Andrew, Plano, TX 75075-5813 (US); Rouyer, Jessy Victor, Fort Worth, TX 76110-3034 (US)
(72) Inventor: LE SAUZE, Nicolas, F-91440 Bures-sur-Yvette (FR)
(74) Representative: Shamsaei Far, Hassan
(86) International application number: PCT/EP2005/014233
(87) International publication number: WO 2007/068282

(56) References cited:
- DUROS UDCAST W DABBOUS INRIA SOPHIA-ANTIPOLIS H IZUMIYAMA N FUJII WIDE Y ZHANG HRL E: "A Link-Layer Tunneling Mechanism for Unidirectional Links; rfc3077.txt" IETF STANDARD, INTERNET ENGINEERING TASK FORCE, IETF, CH, March 2001 (2001-03), pages 1-25, XP015008860 ISSN: 0000-0003 cited in the application

## Description

The invention relates to Ethernet networks having bidirectional and unidirectional optical links, and more precisely to configuring physical ports of such networks.

In the present context, the expression "Ethernet networks" refers to networks using Ethernet protocols to configure the respective states of the physical ports of their switching elements via bidirectional optical links that connect them. These are therefore Ethernet telecommunication networks, for example metropolitan access networks (MAN) and core networks.

Furthermore, in the present context, the expression "Ethernet protocol" refers to any Ethernet protocol based on the transmission of messages over bidirectional optical links, for example, by spanning tree network topology construction protocols, such as protocols based on the Spanning Tree Protocol (STP) and algorithm, e.g. the Rapid Spanning Tree Protocol (RSTP) and algorithm of the IEEE 802.1D-2004 standard or the Multiple Spanning Tree Protocol (MSTP) and algorithm of the IEEE 802.1Q-2005 standard, or a link aggregation protocol, for example the Link Aggregation Control Protocol (LACP) of the IEEE 802.3-2002 standard. More generally, the invention relates to many Ethernet protocols that can be used in Ethernet networks comprising unidirectional ports. This applies in particular to an Ethernet link control protocol such as the Connectivity Fault Management (CFM) Ethernet protocol of the IEEE P802.1ag or protocols such as the shortest path bridging protocol of the IEEE P802.1 aq standard, the Generic Attribute Registration Protocol (GARP), the Multiple Registration Protocol (MRP) or the General VLAN Registration Protocol (GVRP), or other protocols relating to security, for example MAC security (IEEE P802.1AE standard) and port-based network access control (IEEE 802.1X standard).

In certain Ethernet networks, for example Wavelength Passive Optical Network (WPLON) access networks, one upstream channel is sufficient to transmit traffic between first switching elements such as digital subscriber line access multiplexers (DSLAM) and at least one second switching element, such as a hub, whereas a plurality of downstream channels is generally required for transmitting traffic between the second switching element and the first switching elements. This is the case in particular when numerous video streams are transmitted.

As a result of the above, the second switching elements may include more receive modules (or interfaces) than transmit modules (or interfaces), and thus bidirectional physical ports may coexist with unidirectional physical ports. In an Ethernet network controlled by a standard Ethernet protocol, such as LACP, RSTP or MSTP, each switching element port must be bidirectional in order for the standard mechanism managed by the Ethernet protocol to take it into account.

For example, LACP cannot use all of the parallel links between two switching nodes if certain of them are unidirectional. LACP allows rapid protection of the traffic sent from the second node to the first over only bidirectional interfaces, without being able to use the unidirectional interfaces (here of the transmit type).

Moreover, because of the exchange of messages known as bridge protocol data units (BPDU) over bidirectional links, the RSTP can construct a spanning tree network topology only with bidirectional physical ports. In switched Ethernet networks, for example, such as metropolitan networks, Ethernet protocols are used that are dedicated to point-to-point connections and use only bidirectional physical ports at the level of the Ethernet layer (or Layer 2 (L2)) to define the connections between switching elements, thereby preventing the use of unidirectional physical ports.

Consequently, the benefit of using complementary unidirectional physical ports is lost in Ethernet networks because it is impossible for them to participate in spanning tree network topology construction.

To overcome this problem, it has been proposed to define a mechanism for concealing the presence of the unidirectional physical ports from the network layers (for example the Internet protocol (IP) layers) and higher layers. This mechanism is based on creating a tunnel at the level of the link layer between the unidirectional physical port and an additional bidirectional IP port between the two switching elements (here of the router type) connected by unidirectional physical ports. This standard mechanism (see Internet Engineering Task Force (IETF) document RFC 3077) therefore necessitates intervention by the Internet layer (or Layer 3 (L3)) to support these unidirectional physical ports. However, as the person skilled in the art is aware, using an L3 layer control mechanism proves more costly than using layer L2 control mechanisms.

It is therefore an object of the invention to improve on the situation whereby no prior art solution has proven entirely satisfactory.

To this end it proposes a method of configuring ports of switching elements in an Ethernet network comprising at least two switching elements connected by at least two optical links, each switching element being provided with at least one bidirectional physical port and at least one unidirectional physical port.

The configuration method is characterized in that it consists in:
- defining in each of the two switching elements at least one logical port comprising a bidirectional physical port and at least one unidirectional physical port, so that said logical port is seen by its switching element as a bidirectional port,
- using an Ethernet protocol adapted to the bidirectional links to define respective states of said bidirectional physical ports of the different (switching) elements, and
- using each bidirectional physical port of each logical port to transmit Ethernet signaling messages representing its state and a state of each unidirectional physical port of said logical port.

The Ethernet signaling depends on the Ethernet protocol used. For example, if the LACP dedicated to the fast protection of links is used, the Ethernet signaling messages include the respective states of the bidirectional and unidirectional port(s) of the logical port concerned. Remember that, in the context of the LACP, if a unidirectional link fails, then traffic that was intended for it is transferred to the other (remaining) links without it being necessary to make the RSTP reconverge, as the logical connectivity has not been modified (only the quantity of traffic on the other links has been modified).

On the other hand, if the RSTP is used, all the bidirectional and unidirectional port(s) of each logical port must be placed in the same active or passive state so that, in the event of failure of a link between two nodes, the logical ports to which it is connected become passive. Consequently, the Ethernet signaling messages include the overall state of the logical port concerned, which is the same as that of the bidirectional and unidirectional port(s) that constitute it. Remember that, in the context of the RSTP, if connectivity between two nodes is lost, then the RSTP must be made to reconverge.

The method of the invention may have other features, and in particular, separately or in combination:
- in the event of fast protection of the links between the first and second switching elements and between at least one bidirectional link set up between the bidirectional physical ports of their logical ports and at least one unidirectional link set up between unidirectional physical ports respectively dedicated to transmission and to reception within the first and second switching elements, and in the event of detection of a problem leading to the passage to the passive state of the reception unidirectional physical port forming part of the logical port, the second switching element (hub type) reports the error to the first switching element via the bidirectional link and their corresponding bidirectional physical ports so that the first switching element (DSLAM type) disconnects the unidirectional transmission physical port connected to the unidirectional link that is affected by the problem and shares the traffic between the bidirectional and unidirectional links that are still active;
- in the event of detection of a problem leading to the passage from an active state to a passive state of a bidirectional physical port forming part of a first logical port of a first element connected to a second logical port of a second element, said Ethernet protocol is used to redefine said respective states of at least certain of the other bidirectional physical ports to enable the transmission of data between said first and second elements via at least one third element, after which each unidirectional physical port that is part of a logical port including a bidirectional physical port whose state has changed is placed in the same state as that bidirectional physical port;
- in the event of detection of a problem at a unidirectional physical port forming part of a first logical port of a first element connected to a second logical port of a second element and if it is not desirable (or possible) share traffic load over links that are still active, the bidirectional physical port of the first logical port can be placed in the passive state, after which a spanning tree network topology construction Ethernet protocol is used to redefine the respective states of at least certain of the other bidirectional physical ports in order to enable the transmission of data between said first and second switching elements via at least one third switching element, and each unidirectional physical port of each logical port is placed in the same state as the bidirectional physical port of that logical port;
- said first and second logical ports may be placed in the passive state by action at the level of the physical layer (Layer 1 (L1)) of said first and second elements. To this end, the electrical power supply may be removed from all of the physical ports forming part of said first and second logical ports, for example. Alternatively, level 2 (L2) mechanisms may be used, for example by forcing the logical port to cease to send Ethernet protocol signaling messages (e.g. BPDU);
- the Ethernet protocol is selected from a group comprising spanning tree network topology construction protocol (e.g. RSTP or MSTP) and one link aggregation protocol (e.g. LACP).

The invention also relates to a switching element for an Ethernet network comprising at least one bidirectional physical port connected to at least one bidirectional physical port of another element via a first optical link and at least one unidirectional port connected to at least one unidirectional physical port of the other element via a second optical link.

The switching element is characterized in that it comprises management means adapted:
- to define internally at least one logical port comprising each bidirectional physical port and each unidirectional physical port respectively connected to said first and second optical links, so that said logical port is seen internally as a bidirectional port,
- to manage the use of an Ethernet protocol adapted to the bidirectional links to define a state of each of its bidirectional physical ports, and
- to transmit by means of each bidirectional physical port of said logical port Ethernet signaling messages representing its state and a state of each unidirectional physical port of said logical port.

The invention is particularly well adapted, although not exclusively so, to configuring point-to-point connections and point-to-multipoint connections (i.e. connections involving shared optical links).

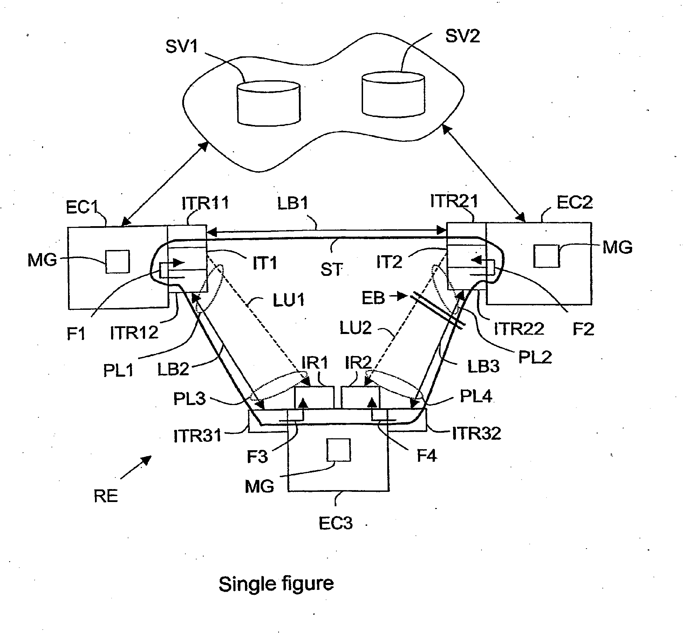

Other features and advantages of the invention will become apparent on reading the following detailed description and examining the appended drawing, the single figure of which is a functional diagram of one example of an Ethernet network with optical links and of the main steps of the method of the invention. The appended drawing constitutes part of the description of the invention as well as contributing to the definition of the invention, if necessary.

An object of the invention is to enable Ethernet protocols adapted to bidirectional optical links also to take account of both bidirectional physical ports and unidirectional physical ports of the switching elements of Ethernet networks.

The use of a method of the invention for configuring an Ethernet network with optical links is described with reference to the single figure.

It is considered hereinafter, by way of nonlimiting example, that the Ethernet network RE is a local area network including three interconnected switching elements ECi (i = 1 to 3) of the switch type. However, the Ethernet network RE may include any number of switching elements greater than or equal to two (2). The invention applies when at least two switching elements are present and an LACP type link aggregation protocol is used or when an xSTP type spanning tree network topology construction protocol (RSTP or MSTP) is used and at least three switching elements are necessary, and in particular two hubs and one digital subscriber line access multiplexer (DSLAM).

Moreover, the invention does not relate only to the Ethernet network architecture shown in the single figure. It relates to any type of architecture, and in particular to a wavelength passive optical network (WPON). Remember that wavelength passive optical networks, for example metropolitan area networks, include at least one switching element constituting a hub and a plurality of switching elements constituting access network nodes (or DSLAM) connected to the hub by optical links.

In the nonlimiting example shown in the single figure, the three switching elements ECl to EC3 ore interconnected by bidirectional optical links LBJ (j = 1 to 3), the first switching element EC1 is connected to the third switching element EC3 by a unidirectional optional link LU1, and the second switching element EC2 is connected to the third switching element EC3 by a unidirectional optical link LU2.

To this end, the first switching element EC1 comprises two bidirectional interfaces ITR11 and ITR12 for transmission and reception and a unidirectional interface IT1 for transmission, the second switching element EC2 comprises two bidirectional interfaces ITR21 and ITR22 for transmission and reception and a unidirectional interface IT2 for transmission, and the third switching element EC3 comprises two bidirectional interfaces ITR31 and ITR32 for transmission and reception and two unidirectional interfaces IR1 and IR2 for reception.

The bidirectional interfaces ITR11 and ITR21 are interconnected by the bidirectional optical link LB1. The bidirectional interfaces ITR12 and ITR31 are interconnected by the bidirectional optical link LB2. The bidirectional interfaces ITR22 and ITR32 are interconnected by the bidirectional optical link LB3. The transmission interface IT1 is connected to the reception interface IR1 by the unidirectional optical link LU1. The transmission interface IT2 is connected to the reception interface IR2 by the unidirectional optical link LU2.

Each bidirectional interface of a switching element ECi is associated with a bidirectional physical port and each unidirectional interface of a switching element ECi is associated with a (number of) unidirectional physical port(s).

The present example of an Internet network RE is for the protected transmission of video streams over a point-to-point connection to the third switching element EC3. For example, the first switching element EC1 is by default that used to transmit video streams coming from a first video server SV1 and/or a second video server SV2 to the third switching element EC3, while the second switching element EC2 protects the first switching element EC1. if it fails or is undergoing maintenance or in the event of a transmission problem on the bidirectional optical link LB2 or the unidirectional optical link LU1. The second switching element EC2 is therefore also connected to the first video server and/or to a second video server SV2 in order to be able to transmit video streams to the third switching element EC3 if the first switching element EC1 is not able to do so.

As indicated above, the invention is intended to enable the Ethernet protocols used to configure the Ethernet network RE, to be more precise the ports of its switching elements ECi, via its bidirectional optical links LBj, to take account of bidirectional physical ports and unidirectional physical ports of the switching elements of the Ethernet network RE.

In the present context, the expression "configuring a port" refers to placing it in an active (or passing or forwarding) state in which it allows the transmission and/or reception of data and a passive (or blocking or discarding) state in which it prohibits the transmission and/or reception of data.

The invention applies provided that at least two switching elements of an Ethernet network are interconnected by at least first and second parallel optical links (of which at least the first is bidirectional) and each has at least one bidirectional physical port and at least one unidirectional physical port connected to the first and second parallel optical links, respectively. It is considered hereinafter, by way of illustrative and nonlimiting example, that the Ethernet protocol used by the Ethernet network RE is the RSTP spanning tree network topology construction protocol. However, the invention is not limited to that type of Ethernet protocol. It relates to any type of Ethernet protocol based on the transmission of messages over bidirectional optical links and in particular to link aggregation protocols such as the LACP.

The invention consists in using a configuration process including three main steps in an Ethernet network RE of the above type.

The first step consists in defining a logical port PLk (k > 0) in each switching element ECi that is connected to another switching element ECi' by at least one bidirectional physical port connected to a bidirectional optical link LBj and by at least one unidirectional physical port connected to another optical link LU1 or LU2, where applicable a unidirectional link.

By definition, each logical port PLk of a switching element ECi comprises each bidirectional physical port and each unidirectional physical port used to interconnect said switching element ECi with at least one other switching element ECi' (or groups them together under the same logical port number). Consequently, a logical port PLk comprises at least one bidirectional physical port and at least one unidirectional physical port. Furthermore, one or more (at least two) logical ports PLk may be defined in a switching element ECi; for example, a switching element ECi in which are defined at least two logical ports PLk may be connected to at least two other switching elements.

In the example shown in the single figure, there is defined in the first switching element EC1 a logical port PL1 including the bidirectional physical port of the bidirectional interface ITR12 and the unidirectional physical port of the transmission interface IT1, there is defined in the second switching element EC2 a logical port PL2 including the bidirectional physical port of the bidirectional interface ITR22 and the unidirectional physical port of the transmission interface IT2, and there is defined in the third switching element EC3 a first logical port PL3, including the bidirectional physical port of the bidirectional interface ITR31 and the unidirectional physical port of the receive interface IR1, and a second logical port PL4, including the bidirectional physical port of the bidirectional interface ITR32 and the unidirectional physical port of the receive interface IR2.

Once the logical ports PLk have been defined, the second step consists in using the Ethernet protocol (here RSTP) to define the respective states of the bidirectional physical ports (ITRi1 and ITRi2) of the various switching elements ECi. These states are defined in an entirely conventional manner by means of messages sent over the bidirectional optical links LBj. In the case of the RSTP, for example, the messages are called bridge protocol data units (BPDU).

Remember that the RSTP is used to construct topological spanning trees with the switching elements ECi of the Ethernet network RE in order to prevent the creation of data loops. Each switching element ECi is associated with a bridge identifier, the switching element holding the identifier of the numerically lowest bridge constituting the root of the spanning tree ST. Each switching element ECi then determines the lowest cost path for accessing the root of its tree ST.

In the present example, the root is the first switching element EC1, so that the lowest cost path between the third switching element EC3 and the first switching element EC1 uses only the bidirectional optical link LB2 and the lowest cost path between the second switching element EC2 and the first switching element EC1 uses only the bidirectional optical link LB1. The tree ST therefore comprises a root EC1 connected to two branches terminating in the switching elements EC2 and EC3 and interconnected by another branch consisting of the bidirectional optical link LB3.

It is important to note that in more complex examples of Ethernet networks than that described above with reference to the single figure a plurality of trees may be defined and constructed, for example using variants of the RSTP or MSTP, and the data traffic may be restricted to certain tree branches using Ethernet virtual local area networks (VLAN).

Once the switching element ECi has determined the lowest cost path for accessing the root of its tree ST, it assigns the active state to each bidirectional physical port that is connected to the bidirectional optical link belonging to the lowest cost path and the passive state to each other bidirectional physical port.

In the present example, the first switching element EC1 places in the active state the two bidirectional physical ports that are respectively associated with its two bidirectional interfaces ITR11 and ITR12, the second switching element EC2 places in the active state its bidirectional physical port that is associated with its bidirectional interface IDR21 and in the passive state its bidirectional physical port that is associated with its bidirectional interface ITR22, and the third switching element EC3 places in the active state its two bidirectional physical ports that are associated with its bidirectional interfaces ITR31 and ITR32. Placing the interface ITR22 facing ITR32 in the passive state prevents the creation of a loop.

Remember that placing a port in the active (or forwarding) state consists in authorizing it to transmit and receive data traffic and to access the medium access control (MAC) addresses of the various sources of that data traffic stored in the MAC address table or in a filtering database of its switching element ECi, whereas placing a port in the passive (or discarding) state consists in prohibiting it from transmitting and receiving data traffic and accessing the MAC addresses of the various sources of that data traffic.

Once each switching element ECi has defined the respective states of its bidirectional physical ports, the third step consists in using each bidirectional physical port of each logical port to transmit Ethernet signaling messages representing its state and the state of each unidirectional physical port of said logical port.

When the RSTP is used, before proceeding to transmit Ethernet signaling messages, each unidirectional physical port that is part of a logical port PLk is placed in the same state as the bidirectional physical port that is part of the logical port PLk. This placement is preferably decided on and managed internally by each switching element ECi.

In the present example, the first switching element EC1 places in the active state its unidirectional physical port that is part of its logical port PL1 (arrow F1), the second switching element EC2 places in the passive state its unidirectional physical port that is part of its logical port PL2 (arrow F2), and the third switching element EC3 places in the active state its first unidirectional physical port that is part of its first logical port PL3 (arrow F3) and in the active state its second unidirectional physical port that is part of its second logical port PL4 (arrow F4), even if the second logical port PL2 to which it is connected is in the passive state (on a blocked line, it is preferable if only one port is passive; here the arbitrary choice has been made to block a port on a hub (EC2) rather than on a DSLAM (EC3)). The third switching element EC3 therefore uses its third logical port PL3 to communicate with the first switching element EC1 and the second switching element EC2.

The bidirectional and unidirectional physical ports included in the logical port PL1 being both placed in the active state, the logical port PL1 is therefore considered to be placed in its active state. Similarly, the bidirectional and unidirectional physical ports respectively included in the logical ports PL3, PL4 being both placed in the active state, the logical ports PL3 and PL4 are therefore considered to be placed in the active state. On the other hand, the bidirectional and unidirectional physical ports included in the logical port PL2 being placed in the passive state, the logical port PL2 is therefore considered to be placed in its passive state, so that no data can be transmitted or received by means of the bidirectional optical link LB3 and the unidirectional optical link LU2 (as indicated by the double line EB in the single figure).

Each unidirectional physical port forming part of a logical port PLk can therefore use the Ethernet protocol (here RSTP) indirectly via the bidirectional physical port of its logical port PLk to define its state (active or passive).

If a problem arises affecting the connectivity between two switching elements, either at the level of an active bidirectional physical port of a switching element ECi or at the level of a bidirectional optical link connected to an active bidirectional physical port of a switching element ECi, that bidirectional physical port goes from the active state to the passive state. In this situation, the Ethernet protocol, here RSTP, reconverges automatically in order to redefine the respective states of at least some of the other bidirectional physical ports of its switching element ECi, for example EC1, and of the other switching elements ECi' concerned, for example EC2 and EC3. This reconvergence is intended to enable data entering the switching element (EC1) to be transmitted to the destination switching element (EC3) via at least one other switching element (here EC2), and vice versa in the opposite direction.

In the present example, the first switching element EC1 places in the passive state its bidirectional physical port that is associated with its bidirectional interface ITR12 if a problem has arisen at the level of the bidirectional optical link LB2 connected to that interface, and maintains its bidirectional physical port that is associated with its other bidirectional interface ITR11 in the active state. The second switching element EC2 maintains its bidirectional physical port that is associated with its bidirectional interface ITR21 in the active state and places in the active state its bidirectional physical port that is associated with its bidirectional interface ITR22. The third switching element EC3 places in the passive state its bidirectional physical port that is associated with its bidirectional interface ITR31 and maintains its directional physical port that is associated with its bidirectional interface ITR32 in the active state.

Once each switching element ECi has redefined the respective states of its bidirectional physical ports, each unidirectional physical port that is part of a logical port PLk including a bidirectional physical port that has been the subject of a change of state is placed in the same state as that bidirectional physical port. This placement is preferably decided on and managed internally by each switching element ECi.

In the present example, the first switching element EC1 places in the passive state its unidirectional physical port (IT1) that is part of its logical port PL1 if a problem has arisen at the level of the bidirectional optical link LB2 that is connected to the bidirectional interface ITR12. The second switching element EC2 places in the active state its unidirectional physical port (IT2) that is part of its logical port PL2. The third switching element EC3 places in the passive state its first unidirectional physical port (IR1) that is part of its logical port PL3.

The bidirectional and unidirectional physical ports included in the logical port PL2 now being placed in the active state, the logical port PL2 is considered to be in its active state. On the other hand, the bidirectional and unidirectional physical ports respectively included in the logical ports PL1 and PL3 being placed in the passive state, the logical ports PL1 and PL3 are now considered to be placed in their passive state, so no data can be transmitted or received by means of the bidirectional optical link LB2 and no data can be transmitted by means of the unidirectional optical link LU1.

If a problem arises affecting the connectivity between two switching elements at the level of an active unidirectional physical port of a switching element ECi or at the level of a unidirectional optical link connected to an active unidirectional physical port of a switching element ECi, that unidirectional physical port goes from the active state to the passive state. However, because the unidirectional physical port is not participating in the Ethernet protocol, here RSTP, the other switching elements cannot become aware of this, and so the data that reaches it is lost.

If the problem occurs at a unidirectional transmission interface, such as the interface IT1, and the interface includes failure detection means, the bidirectional physical port (ITR12) that is part of the logical port PL1 is placed in the passive state and, as indicated above, the Ethernet protocol, here RSTP, reconverges automatically in order to define the respective states of the bidirectional physical ports of the switching elements ECi that are not part of the logical ports PL1 and PL3. This reconvergence is intended to enable data reaching the switching element (EC1) to be transmitted to the destination switching element (EC3) via at least one other switching element (here EC2), and vice versa in the opposite direction.

In the present example, the second switching element EC2 maintains its bidirectional physical port that is associated with its bidirectional interface ITR21 in the active state and places in the active state its bidirectional physical port that is associated with its bidirectional interface ITR22 and the third switching element EC3 maintains its bidirectional physical port that is associated with its bidirectional interface ITR32 in the active state.

If the problem arises directly at the unidirectional receive port IR1 (because of a failure of its interface or a break in the unidirectional link LU1), or in the absence of local means for detecting failure of the unidirectional transmission interface IT1, then the failure is detected through detection of a fault at the level of the unidirectional receive interface IR1 of the logical port PL3. The bidirectional physical port ITR31 that is part of the logical port PL3 of the third switching element EC3 is then placed in the passive state and, as indicated above, the Ethernet protocol, here RSTP, reconverges automatically.

It is important to note that this adaptation of the configuration of the Ethernet network RE if a problem occurs at the level of an active unidirectional physical port of a switching element or at the level of a unidirectional optical link connected to an active unidirectional physical port of a switching element is effected by action at the level of the layer L2 or the layer L1 (physical layer).

To be more precise, the logical ports initially in the active state, here PL1 and PL3, may be placed in the active state by action at the level of the layer L2 of the switching elements concerned, here EC1 and EC3. To effect this, the switching elements EC1 and EC3 may be prohibited from exchanging signaling traffic (or messages) or control traffic (or messages) (managed by xSTP), for example. Alternatively, the electrical power supply could be disconnected from all of the physical ports that are part of the logical ports PL1 and PL3, this action then being managed only by the layer L1.

Once the switching element ECi has redefined the respective states of its bidirectional physical ports, each unidirectional physical port forming part of a logical port PLk including a bidirectional physical port whose state has changed is placed in the same state as that bidirectional physical port. This placement is preferably decided on and managed internally by each switching element ECi.

In the present example, the second switching element EC2 places in the active state its unidirectional physical port that is part of its logical port PL2 and the third switching element EC3 maintains its unidirectional physical port that is part of its second logical port PL4 in the active state.

The bidirectional and unidirectional physical ports included in the logical port PL2 now being placed in the active state, the logical port PL2 is considered to be placed in its active state. On the other hand, the bidirectional and unidirectional physical ports respectively included in the logical ports PL3 and PL1 being placed in the passive state, the logical ports PL1 and PL3 ore now considered to be placed in their passive state so that no data can be transmitted or received by means of the bidirectional optical link LB2 and no data can be transmitted by means of the unidirectional optical link LU1.

There is described above an embodiment of the invention in the case of a spanning tree network topology construction Ethernet protocol (for example of the RSTP type). However, the invention relates to any type of Ethernet protocol based on the transmission of messages over bidirectional optical links, and in particular link aggregation protocols such as the LACP, for example. Remember that an LACP type link aggregation protocol is intended to group into bundles bidirectional physical ports that are connected to bidirectional links connecting pairs of switching elements.

Moreover, there has been described above an application of the invention to point-to-point connections. However, the invention relates equally to point-to-multipoint connections, i.e. connections involving shared optical links.

In this case, each connection between two switching elements must always be effected via at least one bidirectional optical link and at least one unidirectional optical link. However, in that certain optical links are shared, it is no longer obligatory for certain bidirectional optical links to depend systematically on a point-to-point bidirectional interface.

Note generally that the invention applies equally to situations in which the RSTP is replaced by other versions of the spanning tree protocol, for example the standard STP or MSTP version.

Moreover, an embodiment of the invention is described above in very broad terms in which the diagrammatic WPON included only one switching element (EC3, of the DSLAM type). However, the invention applies equally to situations in which the network includes a plurality of (at least two) switching elements like the element EC3. In this case, although the network can still be governed by the RSTP, the use of the MSTP appears to be preferable at present, in particular with (bidirectional or unidirectional) physical links shared between a plurality of switching nodes such as the node EC3.

The switching elements ECi of the Ethernet network RE have to be adapted in order to be able to use the method of the invention, to be more precise by adding to each of them a management module MG for defining each logical port PLk internally, as soon as at least one bidirectional physical port can be associated, in accordance with the invention, with at least one unidirectional physical port, for managing the use of an Ethernet protocol to define the state of each of its bidirectional physical ports, for analyzing the respective states of the bidirectional and unidirectional physical ports of its switching element ECi (which are associated within the logical port(s)) in order to transmit by means of each bidirectional physical port of each logical port Ethernet signaling messages representing its state and the state of each unidirectional physical port of this logical port

Each management module MG may take the form of electronic circuits, software (or electronic data processing) modules, or a combination of circuits and software.

The invention is not limited to the configuration method and switching element embodiments described hereinabove by way of example only, and encompasses all variants that the person skilled in the art might envisage that fall within the scope of the following claims.

## Claims

1. Method of configuration ports of switching elements in an Ethernet network (RE) comprising at least two switching elements (ECi) connected by at least two optical links, each switching element being provided with at least one bidirectional physical port and at least one unidirectional physical port, **characterized in that** it consists in i) defining in each of the two switching elements (ECi) at least one logical port (PLk) comprising a bidirectional physical part at least one unidirectional physical part, so that said logical port (PLk) is seen by its switching element (ECi) as a bidirectional port, ii) using an Ethernet protocol adapted to the bidirectional links (LBj) to define respective states of said bidirectional physical ports, and iii) using each bidirectional physical port of each logical port (PLk) to transmit Ethernet signaling messages representing its state and a state of each unidirectional physical port of said logical (PLk).

2. Method according to claim 1, **characterized in that** all the physical ports of a logical part (PLk) are placed in the same state so that each unidirectional physical part of said logical part (PLk) is supported by said Ethernet protocol.

3. Method according to claim 1, **characterized in that**, in the event of fast protection of the links between the first and second switching elements (EC1) and (EC3) between art least one bidirectional link (LB2) set up between the bidirectional physical ports of their logical ports (PL1, PL3) and at least one unidirectional link (LU1) set up between unidirectional physical ports respectively dedicated to transmission and to reception within the first and second switching elements (EC1, EC3), and in the event of detection of a problem leading to the passage to the passive state of the reception unidirectional physical port forming part of said logical port (PL1), said second switching element (EC3) reports the error to said first switching element (EC1) via the bidirectional link (LB2) and their corresponding bidirectional physical sports so that said first switching element (EC1) disconnects its unidirectional transmission physical port connected to the unidirectional link (LU1) that is affected by the problem and transfers the traffic over the bidirectional and unidirectional link(s) that are still active.

4. Method according to either claim 1 or claim 2, **characterized in** the event of a problem leading to the passage from an active state to a passive state of a bidirectional physical port forming part of a first logical part (PL1) of a first element (EC1) connected to a second logical port (PL3) of a second element (EC3), said Ethernet protocol is used to redefine said respective states of at least certain of the other bidirectional physical ports to enable the transmission of data between said first and second elements (EC1, EC3) via at least one third element (EC2), after which each unidirectional physical port that is part of a logical port (PLk) including a bidirectional physical port whose state has changed is placed in the same state as that bidirectional physical port.

5. Method according to any one of claims 1, 2 and 4, **characterized in that** in the event of a problem leading to the passage from an active state to a passive state at a unidirectional physical port forming part of a first logical port (PL1) of a first element (EC1) connected to a second logical port (PL3) of a second element (EC3) and in the absence of traffic load sharing over links that are still active, the bidirectional physical port of said first logical port (PL1) is placed in the passive state, after which a spanning tree network topology construction Ethernet protocol is used to redefine the respective states of at least certain of the other bidirectional physical ports in order to enable the transmission of data between said first and second switching elements (EC1, EC3) via at least one third switching element (EC2), and each unidirectional physical port of each logical port (PLk) is placed in the same state as the bidirectional physical port of that logical port (PLk).

6. Method according to any one of claims 1 to 5, **characterized in that** said first and second logical ports (PL1, PL3) are placed in the passive state by action at the level of the physical layer of said first and second elements (EC1, EC3).

7. Method according to claim 6, **characterized in that** the electrical power supply is removed from all of the physical ports forming part of said first and second logical ports (PL1, PL3).

8. Method according to any one of claims 1 to 5, **characterized in that** said first and second logical ports (PL1, PL3) are placed in the passive state by action at the level of the Ethernet layer of said first and second elements (EC1, EC3).

9. Method according to claim 8, **characterized in that** said logical port (PL1, PL3) is forced to cease to send Ethernet protocol signaling messages.

10. Method according to any one of claims 1 to 9, **characterized in that** said Ethernet protocol is selected from a group comprising at least one spanning tree network topology construction protocol and one link aggregation protocol.

11. Method according to claim 10, **characterized in that** said spanning tree network typology construction protocol is the RSTP or MSTP.

12. Method according to claim 10, **characterized in that** said link aggregation protocol is the LACP.

13. Switching element (ECi) for an Ethernet network (RE) comprising at least one bidirectional physical port connected to at least one bidirectional physical port of another element (ECi') via a first optical link (LB2) and at least one unidirectional port connected to at least one unidirectional physical port of said other element (ECi') via a second optical link (LU1), **characterized in that** it comprises management means (MG) adapted i) to define internally at least one logical port (PLk) comprising each bidirectional physical port and each unidirectional physical port respectively connected to said first and second optical links (LB1, LU1), so that said logical port (PLk) is seen internally as a bidirectional port, ii) to manage the use of an Ethernet protocol adapted to the bidirectional links (LBj) to define a state of each of its bidirectional physical ports, and iii) to transmit by means of each bidirectional physical port of said logical port (PLk) Ethernet signaling messages representing its state and a state of each unidirectional physical port of said logical port (PLk).

14. Use of the configuration method according to claims 1-12 and the switching element (ECi) according to claim 13 to configure connections selected from a group comprising point-to-point connections and point-to-multipoint connections involving shared optical links.

## Patentansprüche

1. Verfahren zum Konfigurieren von Ports und Schaltelementen in einem Ethernet-Netzwerk (RE) mit mindestens zwei Schaltelementen (EC), welche über mindestens zwei optische Links angeschlossen sind, wobei jedes Schaltelement mindestens einen bidirektionalen physischen Port und mindestens einen unidirektionalen physischen Port aufweist, **dadurch gekennzeichnet, dass** es darin besteht, i) in jedem der zwei Schaltelemente (ECi) mindestens einen logischen Port (PLk), umfassend einen bidirektionalen physischen Port und mindestens einen unidirektionalen physischen Port, zu definieren, so dass der besagte logische Port (PLk) von seinem Schaltelement (ECi) als ein bidirektionaler Port erkannt wird, ii) ein für die bidirektionalen Links (LBi) geeignetes Ethernet-Protokoll zu verwenden, um entsprechende Zustände der besagten bidirektionalen physischen Ports zu definieren, und iii) jeden bidirektionalen physischen Port jedes logischen Ports (PLk) zu benutzen, um Ethernet-Signalisierungsnachrichten zu übertragen, welche seinen Zustand und einen Zustand jedes unidirektionalen physischen Ports des besagten logischen Ports (PLk) darstellen.

2. Verfahren nach Anspruch 1, **dadurch gekennzeichnet, dass** alle physischen Ports eines logischen Ports (PLk) in denselben Zustand versetzt werden, so dass jeder unidirektionale physische Port des besagten logischen Ports (PLk) von dem besagten Ethernet-Protokoll unterstützt wird.

3. Verfahren nach Anspruch 1, **dadurch gekennzeichnet, dass** im Fall eines schnellen Schutzes der Links zwischen dem ersten und dem zweiten Schaltelement (EC1) und (EC3) zwischen mindestens einem bidirektionalen Link (LB2), welcher zwischen den bidirektionalen physischen Ports ihrer logischen Ports (PL1, PL3) eingerichtet ist, und mindestens einem unidirektionalen Link (LU1), welcher zwischen unidirektionalen physischen Ports, die jeweils für die Übertragung und den Empfang an dem ersten und dem zweiten Schaltelement (EC1, EC3) bestimmt sind, eingerichtet ist, und im Fall des Erkennens eines Problems, welches zum Übergang in den passiven Zustand des unidirektionalen physischen Empfangsports, welcher einen Bestandteil des besagten logischen Ports (PL1) bildet, führt, das besagte zweite Schaltelement (EC3) den Fehler über den bidirektionalen Link (LB2) und deren entsprechende bidirektionale physischen Ports an das besagte erste Schaltelement (EC1) meldet, so dass das besagte erste Schaltelement (EC1) seinen unidirektionalen physischen Sendeport, welcher an den von diesem Problem betroffenen unidirektionalen Link (LU1) angeschlossen ist, abschaltet und den Verkehr über den/die weiterhin aktiven bidirektionalen und unidirektionalen Link(s) überträgt.

4. Verfahren nach entweder Anspruch 1 oder Anspruch 2, **dadurch gekennzeichnet, dass** im Fall eines Problems, welches zum Übergang von einem aktiven Zustand in einen passiven Zustand eines bidirektionalen physischen Ports, welcher einen Bestandteil eines ersten logischen Teils (PL1) eines an einen zweiten logischen Port (PL3) eines zweiten Elements (EC3) angeschlossenen ersten Elements (EC1) bildet, führt, das besagte Ethernet-Protokoll benutzt wird, um die besagten jeweiligen Pausen von zumindest bestimmten anderen bidirektionalen physischen Ports neu zu definieren, um die Übertragung von Daten zwischen dem besagten ersten und dem besagten zweiten Element (EC1, EC3) über mindestens ein drittes Element (EC2) zu ermöglichen, und anschließend jeder unidirektionale physische Port, welcher einen Bestandteil eines logischen Ports (PLk) bildet, der einen bidirektionalen physischen Port, dessen Zustand sich geändert hat, umfasst, in denselben Zustand wie dieser bidirektionale physische Port versetzt wird.

5. Verfahren nach einem beliebigen der Ansprüche 1, 2 und 4, **dadurch gekennzeichnet, dass** im Fall eines Problems, welches an einem unidirektionalen physischen Port, der einen Bestandteil eines ersten logischen Ports (PL1) eines an einen zweiten logischen Port (PL3) eines zweiten Elements (EC3) angeschlossenen ersten Elements (EC1) zum Übergang von einem aktiven Zustand in einen passiven Zustand führt, und wenn über die noch aktiven Links keine Verkehrslastteilung besteht, der bidirektionale physische Port des besagten ersten logischen Ports (PL1) in den passiven Zustand versetzt wird und anschließend ein Ethernet-Netzwerktopologieaufbau-Spannbaumprotokoll verwendet wird, um die jeweiligen Zustände von mindestens bestimmten der anderen bidirektionalen physischen Ports neu zu definieren, um die Übertragung von Daten zwischen dem besagten ersten und dem besagten zweiten Schaltelement (EC1, EC3) über mindestens ein drittes Schaltelement (EC2) zu ermöglichen, und jeder unidirektionale physische Port eines jeden logischen Ports (PLk) in denselben Zustand wie der bidirektionale physische Port dieses logischen Ports (PLk) versetzt wird.

6. Verfahren nach einem beliebigen der Ansprüche 1 bis 5, **dadurch gekennzeichnet, dass** der besagte erste und der besagte zweite logische Port (PL1, PL3) durch Eingreifen auf Ebene der physischen Schicht des besagten ersten und des besagten zweiten Elements (EC1, EC3) in den passiven Zustand versetzt werden.

7. Verfahren nach Anspruch 6, **dadurch gekennzeichnet, dass** die elektrische Stromversorgung von allen physischen Ports, welche einen Teil des besagten ersten und des besagten zweiten logischen Ports (PL1, PL3) bilden, entfernt wird.

8. Verfahren nach einem beliebigen der Ansprüche 1 bis 5, **dadurch gekennzeichnet, dass** der besagte erste und der besagte zweite logische Port (PL1, PL3) durch Eingreifen auf Ebene der Ethernet-Schicht des besagten ersten und des besagten zweiten Elements (EC1, EC3) in den passiven Zustand versetzt werden.

9. Verfahren nach Anspruch 8, **dadurch gekennzeichnet, dass** der besagte logische Port (PL1, PL3) gezwungen wird, das Senden von Ethernet-Protokoll-Signalisierungsnachrichten einzustellen.

10. Verfahren nach einem beliebigen der Ansprüche 1 bis 9, **dadurch gekennzeichnet, dass** das besagte Ethernet-Protokoll aus einer Gruppe ausgewählt wird, welche mindestens ein Netzwerktopologieaufbau-Spannbaumprotokoll und ein Link-Aggregation-Protokoll umfasst.

11. Verfahren nach Anspruch 10, **dadurch gekennzeichnet, dass** das besagte Netzwerktopologieaufbau-Spannbaumprotokoll das RSTP oder das MSTP ist.

12. Verfahren nach Anspruch 10, **dadurch gekennzeichnet, dass** das besagte Link-Aggregation-Protokoll das LACP ist.

13. Schaltelement (ECi) für ein Ethernet-Netzwerk (RE) mit mindestens einem bidirektionalen physischen Port, welcher über einen ersten optischen Link (LB2) an mindestens einen bidirektionalen physischen Port eines anderen Elements (ECi') angeschlossen ist, und mindestens einem unidirektionalen Port, welcher über einen zweiten optischen Link (LU1) an mindestens einen unidirektionalen physischen Port des besagten anderen Elements (ECi') angeschlossen ist, **dadurch gekennzeichnet, dass** es Verwaltungsmittel (MG) umfasst, welche dazu ausgelegt sind, i) intern mindestens einen logischen Port (PLk), einschließlich jeden bidirektionalen physischen Port und jeden unidirektionalen physischen Port, welche jeweils an den besagten ersten und den besagten zweiten optischen Link (LB1, LU1) angeschlossen sind, neu zu definieren, so dass der besagte erste logische Port (PLk) intern als ein bidirektionaler Port erkannt wird, ii) die Verwendung eines für die bidirektionalen Links (LBⱼ) geeigneten Ethernet-Protokolls zu verwalten, um einen Zustand dessen bidirektionalen physischen Ports zu definieren, und iii) anhand eines jeden bidirektionalen physischen Ports des besagten logischen Ports (PLk) Ethernet-Signalisierungsnachrichten, welche dessen Zustand und einen Zustand eines jeden unidirektionalen physischen Ports des besagten logischen Ports (PLk) darstellen, zu übertragen.

14. Verwenden des Konfigurationsverfahrens nach den Ansprüchen 1 - 12 und des Schaltelements (ECi) nach Anspruch 13, um aus einer Gruppe, welche Punkt-zu-Punkt-Verbindungen und Punkt-zu-Mehrpunkt-Verbindungen, die gemeinsam benutzte optische Links beinhalten, umfasst, ausgewählte Verbindungen zu konfigurieren.

## Revendications

1. Procédé de configuration de ports d'éléments de commutation dans un réseau Ethernet (RE) comprenant au moins deux éléments de commutation (ECi) connectés par au moins deux liaisons optiques, chaque élément de commutation disposant d'au moins un port physique bidirectionnel et d'au moins un port physique unidirectionnel, **caractérisé en ce qu'**il consiste i) à définir dans chacun des deux éléments de commutation (ECi) au moins un port logique (PLk) comprenant un port physique bidirectionnel et au moins un port physique unidirectionnel, de sorte que ledit port logique (PLk) soit perçu comme un port bidirectionnel par son élément de commutation (ECi), ii) à utiliser un protocole Ethernet adapté aux liaisons bidirectionnelles (LBj) pour définir des états respectifs desdits ports physiques bidirectionnels, et iii) à utiliser chaque port physique bidirectionnel de chaque port logique (PLk) pour transmettre des messages de signalisation d'Ethernet représentant son état et un état de chaque port physique unidirectionnel dudit port logique (PLk).

2. Procédé selon la revendication 1, **caractérisé en ce que** tous les ports physiques d'un port logique (PLk) sont placés dans le même état, de sorte que chaque port physique unidirectionnel dudit port logique (PLk) soit pris en charge par ledit protocole Ethernet.

3. Procédé selon la revendication 1, **caractérisé en ce que**, dans le cas d'une protection rapide des liaisons entre les premier et deuxième éléments de commutation (EC1) et (EC3) entre au moins une liaison bidirectionnelle (LB2) définie entre les ports physiques bidirectionnels de leurs ports logiques (PL1, PL3) et au moins une liaison unidirectionnelle (LU1) définie entre des ports physiques unidirectionnels respectivement dédiés à la transmission et à la réception dans les premier et deuxième éléments de commutation (EC1, EC3), et dans le cas d'une détection d'un problème entraînant le passage à l'état passif du port physique unidirectionnel de réception faisant partie dudit port logique (PL1), ledit deuxième élément de commutation (EC3) signale l'erreur audit premier élément de commutation (EC1) par l'intermédiaire de la liaison bidirectionnelle (LB2) et de leurs ports physiques bidirectionnels correspondants de sorte que ledit premier élément de commutation (EC1) déconnecte son port physique unidirectionnel de transmission connecté à la liaison unidirectionnelle (LU1) qui est affectée par le problème et transfère le trafic par le biais de la/des liaison(s) bidirectionnelle(s) et unidirectionnelle(s) qui est/sont toujours active(s).

4. Procédé selon la revendication 1 ou 2, **caractérisé en ce que**, dans le cas d'un problème entraînant le passage d'un état actif à un état passif d'un port physique bidirectionnel faisant partie d'un premier port logique (PL1) d'un premier élément (EC1) connecté à un deuxième port logique (PL3) d'un deuxième élément (EC3), ledit protocole Ethernet est utilisé pour redéfinir lesdits états respectifs d'au moins certains des autres ports physiques bidirectionnels pour permettre la transmission de données entre lesdits premier et deuxième éléments (EC1, EC3) par l'intermédiaire d'au moins un troisième élément (EC2), après quoi chaque port physique unidirectionnel, qui fait partie d'un port logique (PLk) comprenant un port physique bidirectionnel dont l'état a changé, est placé dans le même état que celui du port physique bidirectionnel.

5. Procédé selon l'une quelconque des revendications 1, 2 et 4, **caractérisé en ce que**, dans le cas d'un problème entraînant le passage d'un état actif à un état passif dans un port physique unidirectionnel faisant partie d'un premier port logique (PL1) d'un premier élément (EC1) connecté à un deuxième port logique (PL3) d'un deuxième élément (EC3) et en l'absence de liaisons de partage de charge de trafic qui sont toujours actives, le port physique bidirectionnel dudit premier port logique (PL1) est placé dans l'état passif, après quoi un protocole Ethernet de construction de topologie de réseau à arbre recouvrant est utilisé pour redéfinir les états respectifs d'au moins certains des autres ports physiques bidirectionnels pour permettre la transmission de données entre lesdits premier et deuxième éléments de commutation (EC1, EC3) par l'intermédiaire d'au moins un troisième élément de commutation (EC2), et chaque port physique unidirectionnel de chaque port logique (PLk) est placé dans le même état que celui du port physique bidirectionnel de ce port logique (PLk).

6. Procédé selon l'une quelconque des revendications 1 à 5, **caractérisé en ce que** lesdits premier et deuxième ports logiques (PL1, PL3) sont placés dans l'état passif par une action au niveau de la couche physique desdits premier et deuxième éléments (EC1, EC3).

7. Procédé selon la revendication 6, **caractérisé en ce que** le bloc d'alimentation électrique est retiré de tous les ports physiques faisant partie desdits premier et deuxième ports logiques (PL1, PL3).

8. Procédé selon l'une quelconque des revendications 1 à 5, **caractérisé en ce que** lesdits premier et deuxième ports logiques (PL1, PL3) sont placés dans l'état passif par une action au niveau de la couche Ethernet desdits premier et deuxième éléments (EC1, EC3).

9. Procédé selon la revendication 8, **caractérisé en ce que** ledit port logique (PL1, PL3) est forcé d'arrêter l'envoi de messages de signalisation de protocole Ethernet.

10. Procédé selon l'une quelconque des revendications 1 à 9, **caractérisé en ce que** ledit protocole Ethernet est sélectionné parmi un groupe constitué d'au moins un protocole de construction de topologie de réseau à arbre recouvrant et un protocole d'agrégation de liaisons.

11. Procédé selon la revendication 10, **caractérisé en ce que** ledit protocole de construction de topologie de réseau à arbre recouvrant est le RSTP ou le MSTP.

12. Procédé selon la revendication 10, **caractérisé en ce que** ledit protocole d'agrégation de liaisons est le LACP.

13. Élément de commutation (ECi) pour un réseau Ethernet (RE) comprenant au moins un port physique bidirectionnel connecté à au moins un port physique bidirectionnel d'un autre élément (ECi') par l'intermédiaire d'une première liaison optique (LB2) et au moins un port unidirectionnel connecté à au moins un port physique unidirectionnel dudit autre élément (ECi') par l'intermédiaire d'une deuxième liaison optique (LU1), **caractérisé en ce qu'**il comprend des moyens de gestion (MG) adaptés i) pour définir de manière interne au moins un port logique (PLk) comprenant chaque port physique bidirectionnel et chaque port physique unidirectionnel respectivement connectés auxdites première et deuxième liaisons optiques (LB1, LU1), de sorte que ledit port logique (PLk) soit perçu de manière interne comme un port bidirectionnel, ii) pour gérer l'utilisation d'un protocole Ethernet adapté aux liaisons bidirectionnelles (LBj) pour définir un état de chacun de ses ports physiques bidirectionnels, et iii) pour transmettre au moyen de chaque port physique bidirectionnel dudit port logique (PLk) des messages de signalisation d'Ethernet représentant son état et un état de chaque port physique unidirectionnel dudit port logique (PLk).

14. Utilisation du procédé de configuration selon les revendications 1 à 12 et de l'élément de commutation (ECi) selon la revendication 13 pour configurer des connexions sélectionnées parmi un groupe constitué de connexions point à point et de connexions point à multipoint impliquant des liaisons optiques partagées.
